# FASCICULE DE BREVET EUROPEEN

(11) **EP 4 005 074 B1**
(45) Date de publication et mention de la délivrance du brevet: **18.03.2026**
(21) Numéro de dépôt: 20757383.3
(22) Date de dépôt: 24.07.2020
(51) Int. Cl.: B64D 27/33, B64D 27/35, H02K 21/28, H02K 16/00

(54) **TURBOGENERATEUR POUR PROPULSION ELECTRIQUE HYBRIDE AERONAUTIQUE**
TURBOGENERATOR FÜR EINEN HYBRIDEN ELEKTRISCHEN AERONAUTISCHEN ANTRIEB
TURBOGENERATOR FOR HYBRID ELECTRIC AERONAUTICAL PROPULSION

(30) Priorité: 26.07.2019 FR 1908503
(43) Date de publication de la demande: 01.06.2022
(73) Titulaire: Safran Helicopter Engines, 64510 Bordes (FR); SAFRAN, 75015 Paris (FR)
(72) Inventeur: VIVE, Loïs, Pierre, Denis, 77550 MOISSY-CRAMAYEL (FR); VIGUIER, Christophe, Ludovic, Jean-Claude, 77550 MOISSY-CRAMAYEL (FR)
(74) Mandataire: Cabinet Beau de Loménie
(86) Numéro de dépôt international: PCT/FR2020/051363
(87) Numéro de publication internationale: WO 2021/019169

(56) Documents cités:
- EP-A1- 2 434 623
- FR-A1- 2 566 975
- FR-A1- 2 618 616

## Description

### Domaine Technique

La présente invention se rapporte au domaine de la propulsion hybride aéronautique et elle concerne plus particulièrement un turbogénérateur dont le générateur électrique peut délivrer une pluralité de tensions de sortie avec des niveaux de puissances distinctes.

### Technique antérieure

Dans un turbogénérateur classique, un générateur électrique couplé à une machine thermique génère une puissance globale à un niveau de tension donnée. Cette énergie est ensuite convertie aux différents niveaux de tension de sortie requis par les récepteurs électriques via une électronique de puissance qui a l'inconvénient d'une masse élevée, notamment lorsque les rapports de conversion en tension sont très importants, ce qui nécessite de recourir à différents étages de conversion.

Cette électronique de puissance est aussi un maillon supplémentaire dans la chaine des rendements et entraine une dégradation de la fiabilité, engendrant à la fois un besoin de puissance supplémentaire pour compenser cette baisse de rendement, et un besoin de refroidissement supplémentaire lié à la nature thermique des pertes associées.

De plus, classiquement les générateurs de gaz des turbines aéronautiques sont munis d'un démarreur électrique pouvant fonctionner en mode générateur lorsque la turbine est démarrée (avec un niveau de tension classique de 28Vdc), dont le rendement est en général faible (environ 70-75%) et qui possède en outre une masse relativement élevée (environ 1,5kg par kW).

Or, la montée en maturité des architectures hybrides électriques propulsives aéronautiques permet l'utilisation de récepteurs électriques exploitant potentiellement des niveaux de puissance et de tension différents.

On connait avec la demande FR2566975 un générateur électrique à plusieurs sorties comportant un rotor à aimants permanents commun et un stator muni d'une pluralité de bobinages permettant notamment la création de trois systèmes triphasés distincts mais non indépendants.

Le document FR2618616 montre une structure de moteur à rotor et stator multiples dans lequel les dimensions axiales du rotor et du stator sont identique.

Dans le document FR2566975, le générateur illustré permet d'obtenir des tensions de sorties différentes avec des stators sectorisés.

Il existe en outre aujourd'hui une nécessité de répondre aux défis techniques posés par ces nouvelles architectures tant dans la rationalisation à la fois des dispositifs de génération et de conversion électrique que dans une réduction de l'encombrement de ces dispositifs de génération et conversion électrique tout en améliorant leur rendement et leur fiabilité.

### Exposé de l'invention

C'est pour répondre à cette nécessité qu'il est proposé un turbogénérateur aéronautique pour propulsion électrique hybride selon la revendication indépendante 1, ce turbogénérateur comprenant :
- une machine thermique
- un générateur électrique, couplé mécaniquement à la machine thermique et comportant un rotor et un stator,

le rotor s'étendant selon une direction axiale et comportant une culasse aimantée commune rotorique comprenant une pluralité d'aimants permanents définissant au moins trois couronnes annulaires mobiles réparties axialement,
le stator comportant une culasse magnétique statorique comprenant une pluralité de bobinages électriques définissant des secteurs fixes répartis axialement et/ou circonférentiellement,
caractérisé en ce qu'au moins deux secteurs fixes dont un recouvrant axialement au moins deux couronnes annulaires mobiles, sont disposés angulairement de sorte à être non coïncidant entre eux et ainsi délivrer au moins deux niveaux de tension distincts et indépendants.

Ainsi, il est possible de mettre à disposition de récepteurs électriques des réseaux électriques alternatifs polyphasés directement utilisables tout en augmentant la fiabilité, la disponibilité de la puissance électrique et en réduisant l'encombrement.

De préférence, au moins un secteur fixe de stator a axialement une dimension différente d'un autre secteur fixe de stator.

Avantageusement, à une couronne annulaire mobile de rotor d'une dimension axiale déterminée, correspond un secteur fixe de stator de dimension axiale différente.

De préférence, à une couronne annulaire mobile de rotor est associée à la fois une partie d'un premier secteur fixe de stator et une partie d'un second secteur fixe de stator.

Avantageusement, les secteurs fixes de stator sont espacés par un simple vide d'air ou par des obstacles formant parois.

Selon le mode de réalisation envisagé, les secteurs fixes de stator sont en nombre pair et disposés symétriquement de part et d'autre d'un axe longitudinal du générateur électrique ou les secteurs fixes de stator sont disposés asymétriquement par rapport à un axe longitudinal du générateur électrique.

De préférence, la machine thermique est une turbine à gaz ou un moteur à combustion interne.

Avantageusement, le rotor présente l'une des aimantations suivantes : radiale, parallèle ou de type Halbach et le stator présente un bobinage diamétral ou concentrique.

### Brève description des dessins

D'autres caractéristiques et avantages de la présente invention ressortiront mieux de la description faite ci-dessous, en référence aux dessins annexés qui en illustrent des exemples de réalisation non limitatifs et sur lesquels :
[Fig. 1] La figure 1 est une vue schématique d'un turbogénérateur aéronautique,
[Fig. 2] La figure 2 représente deux demi-vues en coupe longitudinale d'un générateur électrique de turbogénérateur aéronautique selon des premier et deuxième exemples de réalisation de l'invention,
[Fig. 3] La figure 3 représente deux demi-vues en coupe longitudinale d'un générateur électrique de turbogénérateur aéronautique selon des troisième et quatrième exemples de réalisation de l'invention,
[Fig. 4A-4B] La figure 4 représente deux vues en coupe transversale d'un générateur électrique de turbogénérateur aéronautique selon des cinquième et sixième exemples de réalisation de l'invention,
[Fig. 5A-5B] La figure 6 représente des premier et second exemples de connexion mécanique des bobinages des secteurs fixesde stator du générateur électrique de la figure 4, et
[Fig. 6] La figure 6 représente une vue en déroulé du dessus d'un générateur électrique de turbogénérateur aéronautique selon un septième exemple de réalisation de l'invention.

### Description des modes de réalisation

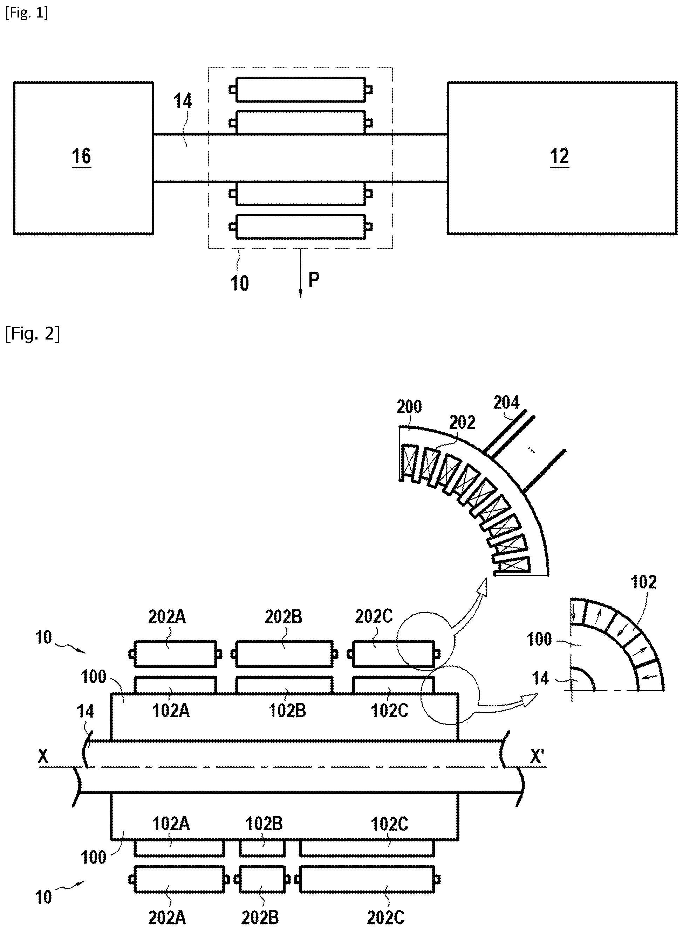

La figure 1 illustre de façon schématique un système de génération de puissance électrique P pour aéronef comportant un générateur électrique 10 couplé mécaniquement à une machine thermique 12 via un arbre d'entrainement 14 lui-même relié à une charge propulsive 16 de l'aéronef.

Dans un aéronef, et plus particulièrement un aéronef à propulsion électrique hybride, la machine thermique est typiquement une turbine à gaz et l'ensemble formé par cette turbine à gaz et le générateur électrique constitue ce qu'il est convenu d'appeler un turbogénérateur aéronautique. Dans certains domaines plus spécifiques, cette machine thermique peut être aussi un moteur à combustion interne, par exemple un moteur diesel.

La turbine à gaz comporte classiquement un compresseur à un ou plusieurs étages (de type axial ou centrifuge), une ou plusieurs chambres de combustion et une turbine de puissance à un ou plusieurs étages (de type radial ou centrifuge) pouvant ou non comporter une turbine libre. Lorsqu'elle comporte une telle turbine libre, la turbine libre et le générateur électrique sont montés sur le même arbre d'entrainement concentrique à un arbre dit haute pression support du compresseur et de la turbine de puissance. Cet arbre supporte alors aussi un démarreur/génératrice assurant le démarrage de la turbine à gaz. Lorsque la turbine à gaz est du type turbine liée, l'arbre d'entrainement est constitué directement par l'arbre haute pression. Dans la suite de la description, l'arbre d'entrainement 14 pourra donc se référer indistinctement à l'une ou l'autre de ces deux configurations de turbines à gaz ou encore à l'arbre de sortie d'un moteur à combustion interne.

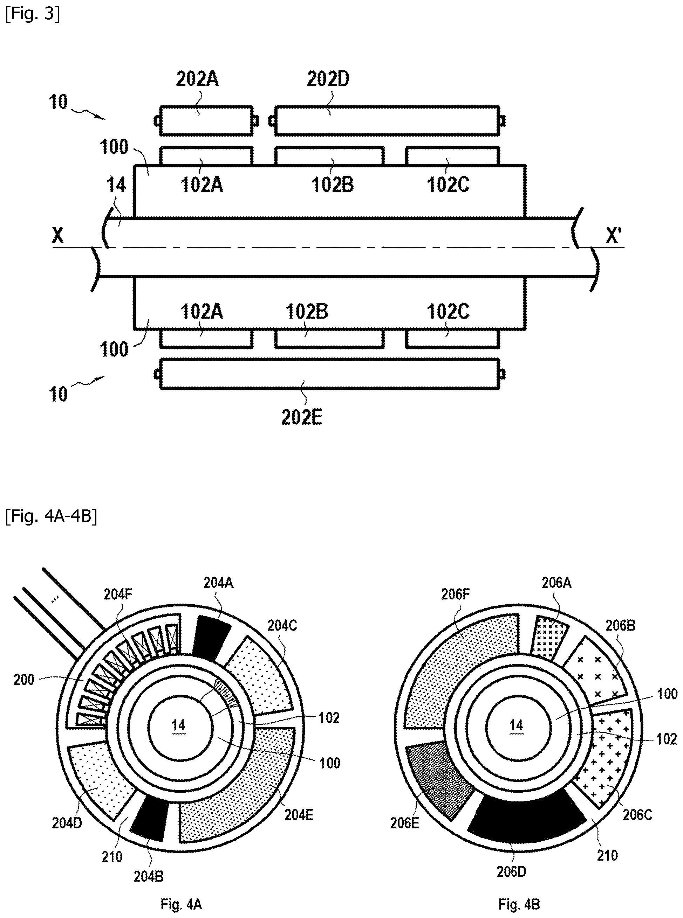

Conformément à l'invention et comme le montrent les figures 2 et 3, le générateur électrique 10 comporte un axe longitudinal XX' qui définit une direction axiale et une direction radiale perpendiculaire. Il comprend un rotor à aimants permanents formé d'une culasse aimantée commune 100 et d'une couronne formée d'une pluralité d'aimants permanents 102 à polarité alternée répartis autour de cette culasse aimantée commune rotorique 100 (voir la loupe associée à ce rotor). Le rotor est sectorisé dans la direction axiale en ce sens que cette couronne d'aimants est disposée en plusieurs couronnes annulaires successives (seuls trois couronnes annulaires sont illustrées pour la simplification des dessins) indépendants les unes des autres et pouvant être soit de dimension identique, selon cette direction axiale, comme le montrent les trois couronnes annulaires 102A, 102B, 102C de la partie supérieure de la figure 2, soit de dimension différente comme le montrent les trois couronnes annulaires 102A, 102B, 102C de la partie inférieure de cette même figure 2. Cette pluralité d'aimants permanents définie ainsi des couronnes annulaires mobiles réparties axialement.

Ce rotor à aimants permanents sectorisé est entouré par un ou plusieurs stator(s). Un stator est formé d'une culasse magnétique commune statorique 200 et d'une pluralité de bobinages 202 distribués le long de cette culasse magnétique commune statorique 200 (voir la loupe associée à ce stator).

Un stator est configuré pour délivrer, indépendamment les uns des autres, un niveau distinct de tension polyphasée via une connexion électrique 204.

Ce stator est également sectorisé selon la direction axiale, chaque secteur axial de stator 202A, 202B, 202C qui peut avoir dans cette direction axiale une dimension identique (voir la partie supérieure de la figure 2) ou non (voir la partie inférieure de la figure 2), définissant des secteurs fixes répartis axialement. Les secteurs fixes répartis axialement de stator peuvent être d'une dimension identique à celle des couronnes annulaires mobiles réparties axialement de rotor en vis-à-vis, comme le montre la figure 2, ou être de dimension différente comme le montre la figure 3. Ainsi, sur la partie supérieure de la figure 3, à trois couronnes annulaires axiales de rotor (pris pour cet exemple de même dimension) correspondent deux secteurs axiaux de stator 202A, 202D et sur la partie inférieure de la figure 3, à trois couronnes annulaires axiales de rotor correspond un secteur unique ou commun 202E de stator qui recouvre toutes les parties des couronnes annulaires axiales de rotor. Plus généralement, le rotor comporte au moins trois couronnes annulaires mobiles et le stator comporte au moins un secteur fixe axial recouvrant au moins deux couronnes annulaires mobiles.

L'aimantation des aimants 102 du rotor peut être radiale, parallèle, de type Halbach ou toute autre configuration appropriée et le bobinage 202 du stator de type diamétral ou concentrique.

Les figures 4A et 4B illustrent deux autres exemples de réalisation de l'invention dans lesquels la sectorisation du stator n'est plus axiale mais circonférentielle définissant des secteurs fixes au moins en partie annulaires, la sectorisation du rotor restant quant à elle axiale. Sur la figure 4A, cette sectorisation circonférentielle est symétrique dans ce sens où les secteurs fixes de stators 204A- 204F sont en nombre pair (six dans l'exemple illustré qui ne saurait être limitatif) et disposés symétriquement de part et d'autre de l'axe longitudinal XX' du générateur électrique. Sur la figure 4B, cette sectorisation circonférentielle est asymétrique dans ce sens où les secteurs fixes de stators 206A- 206F qui peuvent être en nombre pair (six également dans l'exemple illustré) sont disposés asymétriquement par rapport à l'axe longitudinal XX' du générateur électrique, c'est à dire sans respecter aucune symétrie particulière autour du rotor. A chaque secteur est associée une connexion électrique qui permet de délivrer un niveau de tension polyphasée particulier. Les ensembles stators formés par la culasse 200, les bobinages 202 et la connexion électrique 204 sont supportés par la carcasse 210 du moteur.

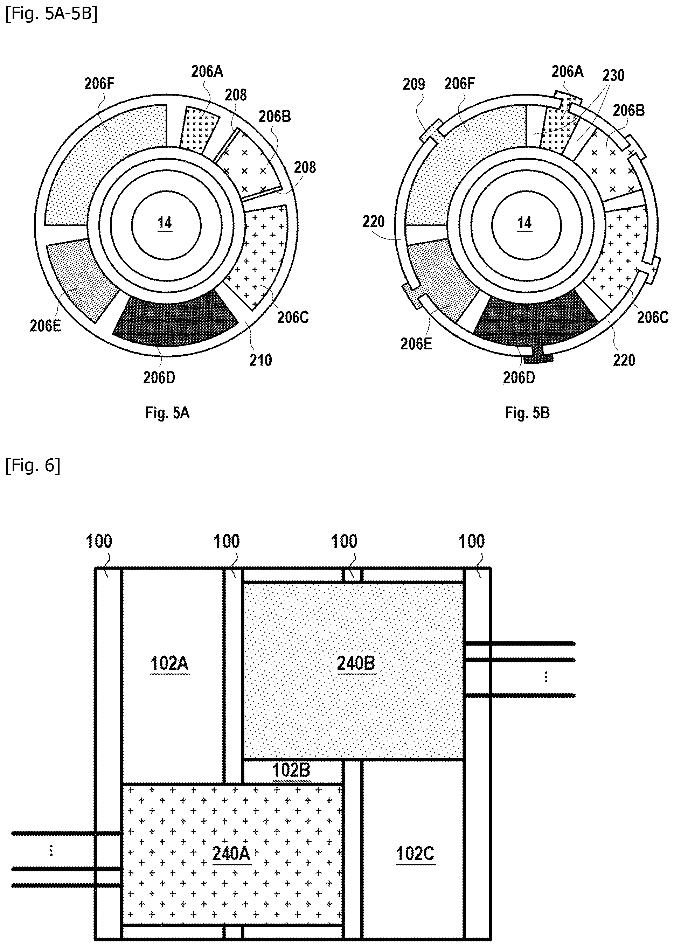

Comme le montrent schématiquement les figures 5A et 5B, la tenue mécanique des bobinages peut être assurée par des obstacles formant parois 208 ou un boulonnage extérieur 209. Dans cette seconde configuration, la carcasse du moteur est constituée seulement par un anneau extérieur formant cage 220, les stators étant espacés par un simple vide d'air 230.

Enfin, la figure 6 illustre un dernier exemple de réalisation préférentiel dans lequel au moins un secteur fixe axial de stator est également sectorisé selon une direction circonférentielle. Ainsi, à un premier stator 240A (culasse, bobinage et connexion électrique) qui s'étend sur plusieurs couronnes annulaires axiales de rotor 102A, 102B succède un second stator 240B (culasse, bobinage et connexion électrique) qui s'étend également sur plusieurs couronnes annulaires axiales de rotor 102B, 102C, une couronne annulaire axiale de rotor commun 102B étant entourée d'un stator sectorisé pour recevoir à la fois une partie du premier stator 240A et une partie du second stator 240B.

Avec l'invention, au moins deux secteurs fixes sont disposés angulairement pour être non coïncidant entre eux et coopérer avec au moins une couronne annulaire mobile pour délivrer au moins deux niveaux de tension distincts et indépendants l'un de l'autre.

On notera que l'ensemble des architectures précédemment décrites permet la génération de N puissances électriques avec N niveaux différents de tension polyphasée avec un seul turbogénérateur. En outre, la connexion mécanique directe sur l'arbre de la machine thermique donne accès à des vitesses de rotations élevées (considérées comme de la haute vitesse) permettant ainsi de minimiser la masse des générateurs électriques et dans le cas de l'utilisation d'une turbine à gaz de type turbine liée (monocorps), il est possible de supprimer l'alternateur-démarreur.

## Revendications

1. Turbogénérateur aéronautique pour propulsion électrique hybride comprenant :
- une machine thermique (12)
- un générateur électrique (10) couplé mécaniquement à la machine thermique et comportant un rotor et un stator,
le rotor s'étendant selon une direction axiale et comportant une culasse aimantée commune rotorique (100) comprenant une pluralité d'aimants permanents (102) définissant au moins trois couronnes annulaires (102A, 102B, 102C) mobiles réparties axialement,
le stator comportant une culasse magnétique statorique (200) comprenant une pluralité de bobinages électriques (202) définissant des secteurs fixes répartis axialement (202A, 202B, 202C, 202D, 202E) et/ou circonférentiellement (204A, 204B, 204C, 204D, 204E, 204F ; 206A, 206B, 206C, 206D, 206E, 206F ),
**caractérisé en ce que** au moins deux secteurs fixes dont un recouvrant axialement au moins deux couronnes annulaires mobiles, sont en outre disposés angulairement de sorte à être non coïncidant entre eux et ainsi délivrer au moins deux niveaux de tension distincts et indépendants.

2. Turbogénérateur aéronautique selon la revendication 1, **caractérisé en ce qu'**au moins un secteur fixe de stator a axialement une dimension différente d'un autre secteur fixe de stator.

3. Turbogénérateur aéronautique selon la revendication 1, **caractérisé en ce que**, à une couronne annulaire mobile de rotor d'une dimension axiale déterminée, correspond un secteur fixe de stator de dimension axiale différente.

4. Turbogénérateur aéronautique selon la revendication 2, **caractérisé en ce que**, à une couronne annulaire mobile de rotor (102B) est associé à la fois une partie d'un premier secteur fixe de stator (240A) et une partie d'un second secteur fixe de stator (240B).

5. Turbogénérateur aéronautique selon la revendication 4, **caractérisé en ce que** les secteurs fixes de stator sont espacés par un simple vide d'air (230) ou par des obstacles formant parois (208).

6. Turbogénérateur aéronautique selon la revendication 1, **caractérisé en ce que** les secteurs fixes de stators sont en nombre pair et disposés symétriquement de part et d'autre d'un axe longitudinal du générateur électrique.

7. Turbogénérateur aéronautique selon la revendication 1, **caractérisé en ce que** les secteurs fixes de stators sont disposés asymétriquement par rapport à un axe longitudinal du générateur électrique.

8. Turbogénérateur aéronautique selon l'une quelconque des revendications 1 à 7, **caractérisé en ce que** la machine thermique (12) est une turbine à gaz ou un moteur à combustion interne.

9. Turbogénérateur aéronautique selon l'une quelconque des revendications 1 à 8, **caractérisé en ce que** le rotor (100, 102) présente une des aimantations suivantes : radiale, parallèle ou de type Halbach.

10. Turbogénérateur aéronautique selon l'une quelconque des revendications 1 à 9, **caractérisé en ce que** le stator (200, 202, 204) présente un bobinage diamétral ou concentrique.

## Patentansprüche

1. Luftfahrt-Turbogenerator für den elektrischen Hybridantrieb, umfassend:
- eine thermische Maschine (12),
- einen elektrischen Generator (10), der mechanisch an die thermische Maschine gekoppelt ist und einen Rotor und einen Stator beinhaltet,
wobei der Rotor sich gemäß einer axialen Richtung erstreckt und ein gemeinsames rotierendes Magnetjoch (100) beinhaltet, das mehrere Permanentmagnete (102) umfasst, die zumindest drei bewegliche ringförmige Kränze (102A, 102B, 102C) umfasst, die axial verteilt sind,
wobei der Stator ein Stator-Magnetjoch (200) beinhaltet, das mehrere elektrische Spulen (202) umfasst, die axial (202A, 202B, 202C, 202D, 202E) und/oder über den Umfang (204A, 204B, 204C, 204D, 204E, 204F; 206A, 206B, 206C, 206D, 206E, 206F) verteilte feststehende Sektoren definieren,
**dadurch gekennzeichnet, dass** ferner zumindest zwei feststehende Sektoren, von welchen eine axial zumindest zwei ringförmige bewegliche Kränze überdeckt, in einem Winkel auf solche Weise angeordnet sind, dass sie nicht miteinander zusammenfallen, und somit zumindest zwei unterschiedliche und voneinander unabhängige Spannungsniveaus liefern.

2. Luftfahrt-Turbogenerator nach Anspruch 1, **dadurch gekennzeichnet, dass** zumindest ein feststehender Stator-Sektor axial eine andere Dimension als ein anderer feststehender Stator-Sektor aufweist.

3. Luftfahrt-Turbogenerator nach Anspruch 1, **dadurch gekennzeichnet, dass** einem ringförmigen beweglichen Rotorkranz mit einer bestimmten axialen Dimension ein feststehender Stator-Sektor mit einer unterschiedlichen axialen Dimension entspricht.

4. Luftfahrt-Turbogenerator nach Anspruch 2, **dadurch gekennzeichnet, dass** einem ringförmigen beweglichen Rotorkranz (102B) gleichzeitig ein Teil eines ersten feststehenden Stator-Sektors (240A) und ein Teil eines zweiten feststehenden Stator-Sektors (240B) entspricht.

5. Luftfahrt-Turbogenerator nach Anspruch 4, **dadurch gekennzeichnet, dass** die feststehenden Stator-Sektoren durch einen einfachen Luftspalt (230) oder durch Hindernisse, die Wände (208) bilden, beabstandet sind.

6. Luftfahrt-Turbogenerator nach Anspruch 1, **dadurch gekennzeichnet, dass** die feststehenden Stator-Sektoren zahlenmäßig gepaart sind und symmetrisch auf beiden Seiten einer Längsachse des elektrischen Generators angeordnet sind.

7. Luftfahrt-Turbogenerator nach Anspruch 1, **dadurch gekennzeichnet, dass** die feststehenden Stator-Sektoren asymmetrisch in Bezug auf eine Längsachse des elektrischen Generators angeordnet sind.

8. Luftfahrt-Turbogenerator nach einem der Ansprüche 1 bis 7, **dadurch gekennzeichnet, dass** die thermische Maschine (12) eine Gasturbine oder ein Verbrennungsmotor ist.

9. Luftfahrt-Turbogenerator nach einem der Ansprüche 1 bis 8, **dadurch gekennzeichnet, dass** der Rotor (100, 102) eine der folgenden Magnetanordnungen aufweist: radial, parallel oder vom Halbach-Typ.

10. Luftfahrt-Turbogenerator nach einem der Ansprüche 1 bis 9, **dadurch gekennzeichnet, dass** der Stator (200, 202, 204) eine diametrale oder konzentrische Spulenanordnung aufweist.

## Claims

1. An turbogenerator for hybrid electric aeronautical propulsion comprising:
- a heat engine (12)
- an electrical generator (10) mechanically coupled to the heat engine and including a rotor and a stator,
the rotor extending in an axial direction and including a common magnetized rotor yoke (100) comprising a plurality of permanent magnets (102) defining at least three axially distributed movable annular rings (102A, 102B, 102C),
the stator including a magnetic stator yoke (200) comprising a plurality of electrical windings (202) defining axially (202A, 202B, 202C, 202D, 202E) and/or circumferentially (204A, 204B, 204C, 204D, 204E, 204F; 206A, 206B, 206C, 206D, 206E, 206F) distributed stationary sectors,
**characterized in that** at least two stationary sectors, including one covering axially at least two movable annular rings, are further arranged angularly so as not to coincide with one another and thus deliver at least two distinct and independent voltage levels.

2. The aeronautical turbogenerator according to claim 1, **characterized in that** at least one stationary sector has axially a dimension that is different from another stationary stator sector.

3. The aeronautical turbogenerator according to claim 1, **characterized in that**, to a rotor movable annular ring with a determined axial dimension, corresponds a stationary stator sector with a different axial dimension.

4. The aeronautical turbogenerator according to claim 2, **characterized in that**, to a rotor movable annular ring (102B) is associated both a portion of a first stationary stator sector (240A) and a portion of a second stationary stator sector (240B).

5. The aeronautical turbogenerator according to claim 4, **characterized in that** the stationary stator sectors are spaced by a simple air gap (230) or by obstacles forming walls (208).

6. The aeronautical turbogenerator according to claim 1, **characterized in that** the stationary stator sectors are even in number and arranged symmetrically on either side of a longitudinal axis of the electrical generator.

7. The aeronautical turbogenerator according to claim 1, **characterized in that** the stationary stator sectors are arranged asymmetrically relative to a longitudinal axis of the electrical generator.

8. The aeronautical turbogenerator according to any one of claims 1 to 7, **characterized in that** the heat engine (12) is a gas turbine or an internal-combustion engine.

9. The aeronautical turbogenerator according to any one of claims 1 to 8, **characterized in that** the rotor (100, 102) has one of the following magnetizations: radial, parallel or Halbach type.

10. The aeronautical turbogenerator according to any one of claims 1 to 9, **characterized in that** the stator (200, 202, 204) has a diametrical or concentric winding.
